# EUROPÄISCHE PATENTANMELDUNG

(11) **EP 4 825 990 A1**
(43) Veröffentlichungstag der Anmeldung: **21.10.2026**
(21) Anmeldenummer: 26168916.0
(22) Anmeldetag: 30.03.2026
(51) Int. Cl.: C21D 1/10, C21D 1/42, C21D 9/00, C21D 9/40

(54) **WERKSTÜCKAUFNAHMEVORRICHTUNG UND INDUKTIVE HÄRTEANLAGE**

(30) Priorität: 15.04.2025 DE 102025114638
(71) Anmelder: Aktiebolaget SKF, 415 50 Göteborg (SE)
(72) Erfinder: Wendel, Michael, 28219 Bremen (DE); Sticht, Martina, 97526 Sennfeld (DE)
(74) Vertreter: Kuhstrebe, Jochen

(57) **Zusammenfassung**

Offenbart wird eine Werkstückaufnahmevorrichtung zum Aufnehmen eines Werkstücks in einer Wärmebehandlungsanlage, insbesondere einer Härteanlage zum Härten zumindest eines Teils des Werkstücks, wobei das Werkstück einen geschlossenen Kurvenzug und eine im Wesentlichen radiale Innenfläche (22) und eine im Wesentlichen radiale Außenfläche (24) aufweist, und in der Werkstückaufnahmevorrichtung (6) um eine Drehachse herum rotierbar aufnehmbar ist und mittels einer Wärmvorrichtung erwärmbar ist, wodurch es eine thermische Expansion und/oder Kontraktion erfährt, wobei die Werkstückaufnahmevorrichtung (6) mindestens drei Auflageeinheiten (12) aufweist, die dazu ausgelegt sind, dass das Werkstück (2) auf ihnen aufliegt, und mindestens drei Anlageeinheiten aufweist, die dazu ausgelegt sind, dass das Werkstück (2) in der Werkstückaufnahmevorrichtung (6) in einer vordefinierten radialen Lage positioniert ist, wobei zwei der drei Anlageeinheiten(8) als passive Anlageeinheit und eine der drei Anlageeinheiten als aktive Anlageeinheit ausgebildet sind, wobei die aktive Anlageeinheit dazu ausgelegt ist, eine radiale Spannkraft auf das Werkstück (2) aufzubringen.

## Beschreibung

### Technisches Gebiet

Vorliegende Erfindung betrifft eine Werkstückaufnahmevorrichtung zum Aufnehmen eines Werkstücks in einer Wärmebehandlungsanlage, in der das Werkstück aufgrund einer Wärmebehandlung eine thermische bzw. eine durch einen bei der Phasenumwandlung im Gefüge entstehenden Dichteunterschied entstehende Expansion und/oder Kontraktion erfährt. Weiterhin betrifft die Erfindung eine induktive Härteanlage.

### Technischer Hintergrund

Um Werkstücke thermisch zu behandeln, beispielsweise um sie zu erhitzen oder abzuschrecken, müssen die Werkstücke sicher und positionsgenau zu der Behandlungsanlage angeordnet werden, um sehr exakte Wärmeeinträge und anschließend definierte Abschreckungsprozesse der Behandlungszonen zu erreichen. Dazu können übliche Spannmittel eingesetzt werden, wie beispielsweise sogenannte Drei- oder Vierbackenfutter, die drei oder vier Spannbacken aufweisen, die an einem Werktisch montiert sind und sich umfänglich um das zu haltende Werkstück gruppieren. In diese Spannbacken wird vor der Behandlung des Werkstücks das Werkstück eingespannt und festgehalten, wobei ein Nachführen der Spannbacken möglich ist, um eine thermische bzw. eine durch einen bei der Phasenumwandlung im Gefüge entstehenden Dichteunterschied entstehende Kontraktion und/oder Expansion auszugleichen. Weiterhin ist bekannt, bei derartigen Vorrichtungen, den gesamten Werktisch zusammen mit den Spannbacken an feststehenden Wärmequellen, wie beispielsweise Induktoren, vorbeizubewegen, um die Nachführung der für die Wärmequellen nötigen Versorgungsleitungen zu vereinfachen.

Nachteilig an dieser Vorrichtung ist jedoch, dass die Kraft, die für die Nachführung der Backen aufgrund der auszugleichenden thermischen bzw. eine durch einen bei der Phasenumwandlung im Gefüge entstehenden Dichteunterschied entstehende Expansion oder Kontraktion nötig ist, zu gering gewählt sein kann und es dann doch dazu kommen kann, dass die Backen nicht mehr an dem Werkstück anliegen und dieses damit nicht ausreichend festhalten können, oder eine zu hohe Krafteinwirkung der Backen zu einer Verformung des Werkstücks führt oder zu einem ungünstigem Eigenspannungszustand im Werkstück. Darüber hinaus müssen alle Backen angesteuert werden, was zu einem sehr großen Steueraufwand führt.

Weiterhin ist bei den bekannten Vorrichtungen problematisch, dass die große zu bewegende Masse aus Werktisch, Spannbacken und Werkstück zu einem sehr großen Energieaufwand und Verschleiß im Antriebssystem des Werktischs führt, so dass dessen Komponenten oft ersetzt oder der Antrieb ganz ausgetauscht werden muss. Auch sind den Prozessparametern, wie beispielsweise einer Relativgeschwindigkeit zwischen der Wärmequelle, wie beispielsweise einem Induktor, und Werkstück, aufgrund der großen zu bewegenden Masse und den Abmaßen der Vorrichtung insgesamt Grenzen gesetzt, so dass nicht immer ein optimierter Wärmeeintrag in das Werkstück erreicht werden kann.

Der Wärmeeintrag und die Verteilung des Wärmeeintrags im Werkstück sind jedoch von enormer Wichtigkeit, um die gewünschten Werkstückeigenschaften in den Behandlungszonen zu erreichen und die sich ergebenden Maß- und Formänderungen (Werkstückverzug) zu steuern. Bekannte Möglichkeiten zur Beeinflussung des Wärmeeintrags und der Temperaturverteilung im Falle des Beispiels einer induktiven Erwärmung sind eine geeignete Wahl der Prozessparameter bzw. des Prozessdesigns (elektrische Leistung, Heizzeit, Erwärmfrequenz, Kopplungsabstand Induktor - Werkstück, Induktormaterial, Induktordesign, gezielter Einsatz von Magnetfeldkonzentratoren, Werkstückmaterial, Vorzustand des Werkstückmaterials, Relativgeschwindigkeit des Werkstücks zum Induktor, etc.).

Somit ist ein entscheidendes Element der Wärmebehandlungsanlage und des Erfolgs der Wärmebehandlung die Werkstückaufnahmevorrichtung.

Es ist deshalb Aufgabe vorliegender Erfindung eine Werkstückaufnahmevorrichtung, insbesondere ein Werkstückspannsystem, bereitzustellen, welches folgende Funktionen, vorzugsweise gesamtheitlich, erfüllt:
- Einen vordefinierten Kopplungsabstand Induktor-Werkstück sicherstellen;
- Das Werkstück in einer definierten Lage positionieren;
- Das Werkstück während der gesamten Prozesszeit in einer definierten Lage halten entgegen der angreifenden Kräfte (z.B. Magnetfelder);
- Eine gute Reproduzierbarkeit der Wärmebehandlung gewährleisten;
- Die Wärmebehandlung an allen Positionen des Werkstücks (innen, außen, Seitenflächen oben und unten) ermöglichen;
- Eine Rissbildung vermeiden;
- Werkstück Verzug bzw. Deformationen minimieren;
- Das Werkstück mit einer definierten Drehzahl sicher bewegen, welche während des Prozesses verändert werden kann;
- Das Aufprägen von Spannkräften, welche während des Prozesses verändert werden können.

### Zusammenfassung der Erfindung

Diese Aufgabe wird durch eine Werkstückaufnahmevorrichtung gemäß Patentanspruch 1, sowie eine induktive Härteanlage gemäß Patentanspruch 11 gelöst.

Im Folgenden wird eine Werkstückaufnahmevorrichtung zum Aufnehmen eines Werkstücks in einer Wärmebehandlungsanlage, insbesondere einer Härteanlage zum Härten zumindest eines Teils des Werkstücks, vorgestellt, wobei das in der Werkstückaufnahmevorrichtung aufgenommene Werkstück eine thermische bzw. eine durch einen bei der Phasenumwandlung im Gefüge entstehenden Dichteunterschied entstehende Expansion und/oder Kontraktion erfährt. Im Weiteren wird meist nur von thermischer Expansion bzw. Kontraktion geredet, da auch bei einer Phasenumwandlung üblicherweise eine thermische Komponente vorhanden ist.

Das Werkstück selbst hat einen geschlossenen Kurvenzug und eine im Wesentlichen radiale Innenfläche und eine im Wesentlichen radiale Außenfläche und mittels einer Wärmvorrichtung erwärmbar ist, wodurch es die thermische Expansion und/oder Kontraktion erfährt. Das Werkstück ist vorzugsweise rotationssymmetrisch ausgestaltet, wie beispielsweise ein Element eines Gleit- oder Wälzlagers, ein Lagerring, ein Zahnrad, ein Bolzen, eine Hülse, eine Scheibe etc..

Um den Verschleiß der Bauteile der Werkstückaufnahmevorrichtung, insbesondere aufgrund hoher Masse, zu reduzieren und gleichzeitig den Wärmeeintrag in das Werkstück zu optimieren, ist das in der Werkstückaufnahmevorrichtung aufgenommene Werkstück um eine Drehachse rotierbar gelagert. Da lediglich das Werkstück, nicht aber die gesamte Einheit aus Werkstück, Werktisch, Spanneinheiten und weiteren Gerätschaften in Bewegung gesetzt werden muss, sondern lediglich das Werkstück, kann, auch bei großen Werkstücken, eine große Gewichtsreduktion der in Bewegung zu versetzenden Teile erreicht werden. Dies wiederum ermöglicht, neben der geringeren Belastung der Bauteile und damit auch einem geringeren Verschleiß der Bauteile eines Antriebssystems, auch eine präzisiere Einstellung der Prozessparameter, wie bspw. der Rotationsgeschwindigkeit und damit einen verbesserten Wärmeeintrag in das Werkstück. Des Weiteren muss weniger Energie aufgewandt werden, um das Werkstück in Rotation zu versetzen, als bei den herkömmlichen Systemen, so dass dadurch auch eine Kostenreduktion möglich ist.

Weiterhin weist die Werkstückaufnahmevorrichtung mindestens drei Auflageeinheiten, die dazu ausgelegt sind, dass das Werkstück auf ihnen aufliegt, und mindestens drei Anlageeinheiten auf, die dazu ausgelegt sind, dass das Werkstück in der Werkstückaufnahmevorrichtung in einer vordefinierten radialen und axialen Lage positioniert ist.

Um die Ansteuerung und Regelung zu vereinfachen und eine möglichst robuste und einfach zu bedienende Wärmebehandlungsanlage bereitzustellten, die jedoch gleichzeitig eine exakte radiale Positionierung des Werkstücks in der Wärmebehandlungsanlage bereitzustellen, wird vorgeschlagen, dass zwei der drei Anlageeinheiten als passive Anlageeinheit und eine der drei Anlageeinheiten als aktive Anlageeinheit ausgebildet sind, wobei die aktive Anlageeinheit dazu ausgelegt ist, aktiv eine radiale Spannkraft auf das Werkstück aufzubringen.

Es ist zu bemerken, dass im Rahmen der Anmeldung die Begriffe "steuern" und "regeln" nicht im streng elektrotechnischen Fachmannjargon verwendet werden. So kann mit "steuern" auch eine Reglung gemeint sein und umgekehrt.

Überraschenderweise hat sich gezeigt, dass es ausreichend ist, das Werkstück nur mittels einer aktiv regelbaren Anlageeinheit auf einer vordefinierten Position zu halten, und trotzdem sicherzustellen, dass das Werkstück während der gesamten Prozesszeit in einer definierten radialen Lage gehalten und positioniert werden kann, selbst entgegen etwaigen angreifenden Kräften, wie beispielsweise Magnetfeldern von Induktoren. Gleichzeitig kann mit den drei Anlageeinheiten eine besonders gleichmäßige Spannkraft auf das Werkstück ausgeübt werden, und das Werkstück positionsgenau in seiner Lage gesichert werden. Dadurch kann zudem ein vordefinierten Kopplungsabstand Induktor-Werkstück eingestellt werden. Dies wiederum ermöglicht eine gute Reproduzierbarkeit der Wärmebehandlung. Da lediglich drei Anlageeinheiten vorgesehen sind, wird wiederum problemlos eine Wärmebehandlung an allen Positionen des Werkstücks (innen, außen, Seitenflächen oben und unten) ermöglicht.

Dabei ist ebenfalls ausreichend, dass für die Anpassbarkeit an verschiedene Größen des Werkstücks lediglich die aktive Anlageeinheit radial verstellbar ist. Dies vereinfacht die Werkstückaufnahme signifikant, da lediglich eine Anlageeinheit an die Größe des Werkstücks angepasst werden muss. Dadurch kann auch sichergestellt werden, dass unabhängig von der Größe des Werkstücks, das Werkstück immer mittig in der Werkstückaufnahme zentriert ist.

Alternativ kann es natürlich ebenfalls bevorzugt sein, wie ein weiteres vorteilhaftes Ausführungsbeispiel zeigt, dass, um die Werkstückaufnahme an verschiedene Größen von Werkstücken anzupassen, die drei Anlageeinheiten an sich radial verstellbar ausgestaltet sind, beispielsweise mittels elektrischen oder hydraulischen Antriebs, und vor der thermischen Behandlung solange in Richtung Werkstück verfahren werden, bis dieses fest zwischen den Spanneinheiten gehalten wird. Im Betrieb sind dann aber zwei der Anlageeinheiten radial festgelegt und stellen die passiven Anlageeinheiten dar, während die dritte aktive Anlageeinheit auch im Betrieb radial verstellbar ist, um das Werkstück positionsgenau in seiner Lage zu sichern und Fertigungstoleranzen im Betrieb ausgleichen zu können. Zudem kann die aktive Anlageeinheit exzentrisch verschiebbar gelagert sein. Dadurch kann die aktive Anlageeinheit der thermischen Expansion/Kontraktion des Werkstücks nachfolgen. Die exzentrische Lagerung ermöglicht dabei sowohl eine radiale als auch eine tangentiale Beweglichkeit der Anlageeinheit.

Weiterhin ist ein Ausführungsbeispiel vorteilhaft, bei dem jede Anlageeinheit ein Anlageelement aufweist, das dazu ausgelegt ist, an der radialen Innenfläche und/oder radialen Außenfläche des Werkstücks anzuliegen, wobei die Anlageelemente der passiven Anlageeinheit als passive Anlageelemente ausgebildet sind, die im Betrieb in radialer Richtung feststehend sind, und das Anlageelement der aktiven Anlageeinheit als aktives Anlageelement ausgebildet ist, das im Betrieb in radialer Richtung verschiebbar ist, um die radiale Spannkraft auf das Werkstück aufzubringen und das Werkstück positionsgenau in seiner radialen und axialen Lage zu sichern.

Mit Hilfe des aktiven Anlageelements kann das Werkstück mit einer definierten Kraft und definierten Kraftangriffspunkten gespannt werden. Zudem kann dadurch ermöglicht werden, einer Werkstückschrumpfung bzw. dem verringertem Werkstückwachstum auf Grund der thermischen Kontraktion im Temperaturbereich der Phasenumwandlungen Ferrit/α-Eisen zu Austenit/y-Eisen (A1-Temperatur bis A3-Temperatur, bei etwa 740 °C bis 860 °C je nach Stahl, Gefügezustand und Erwärmgeschwindigkeit) und/oder auf Grund der anschließenden Abkühlung zu folgen. Gleichzeitig kann durch das aktive Anlageelement aber auch einem Werkstückwachstum bzw. der verringerten Werkstückschrumpfung auf Grund der Volumenszunahme während der Abschreckung im Bereich der Phasenumwandlung Austenit/y-Eisen zu Martensit und/oder Bainit/Perlit/Ferrit (dieser Temperaturbereich der Martensitbildung kann je nach Lösungszustand und Stahl bei typischerweise etwa 400 °C bis 100 °C liegen) gefolgt werden.

Dabei ist insbesondere vorteilhaft, wenn bei einem im Wesentlichen kreisförmig zu behandelnden Werkstück das aktive Anlageelement nicht nur radial, sondern auch axial und/oder tangential bewegbar ist. Dadurch können nicht nur thermische Expansionen/Kontraktionen während der thermischen Bearbeitung des Werkstücks aufgenommen werden, sondern auch Fertigungstoleranzen, wie beispielsweise eine gewisse Ovalität des Werkstücks beim Einspannen ausgeglichen werden. Eine derartige Anpassung ist insbesondere bei Werkstücken mit geschlossenem Kurvenzug, wie beispielsweise Elementen eines Gleit- oder Wälzlagers, Lagerringen, Zahnrädern, Bolzen, Hülsen, Scheiben etc. vorteilhaft.

Eine weitere Ausgestaltung sieht vor, dass axial wirkende Niederhalter vorgesehen sind, die zusätzlich auch in axiale Richtung der thermischen Expansion/Kontraktion des Werkstücks nachfolgen können. Diese ermöglichen, dass auch bei leichten Werkstücken und starken Magnetfeldern der Induktionsspulen, das Werkstück ruhig in seiner Position gehalten werden kann.

Gemäß einem weiteren bevorzugten Ausführungsbeispiel sind die drei Anlageeinheiten in der Werkstückaufnahmevorrichtung gleich beabstandet in einem Winkel von im Wesentlichen von 120° zueinander angeordnet. Dies ermöglicht eine gleichmäßige Anlagekraft an allen Anlageeinheiten.

Alternativ kann es aber auch bevorzugt sein, dass die Anlageeinheiten derart in der Werkstückaufnahmevorrichtung angeordnet sind, dass zwischen den passiven Anlageeinheiten ein Winkel von weniger oder mehr als 120° ausgebildet ist, und die aktive Anlageeinheit von den beiden passive Anlageeinheiten gleich beabstandet angeordnet ist. Dadurch kann ermöglicht werden, dass die beiden passiven Anlageeinheiten unabhängig von der Größe des Werkstücks radial feststehend ausgebildet sind. Bei größeren Werkstücken verringert sich dann der Winkel zwischen den beiden passiven Anlageeinheit, während sich bei kleineren Werkstücken der Winkel vergrößert. Durch die gleich von den passiven Anlageeinheiten beabstandete aktive Anlageeinheit kann jedoch immer sichergestellt werden, dass insgesamt eine gleichmäßige Spannkraft in das Werkstück eingetragen wird.

Gemäß einem weiteren vorteilhaften Ausführungsbeispiel, ist mindestens eine der Anlageeinheiten als eine angetriebene rotierbare Anlageeinheit ausgebildet, die von einer Antriebseinheit angetrieben ist und dazu ausgelegt ist, das in der Werkstückaufnahmevorrichtung aufgenommene Werkstück in Rotation zu versetzen. Dabei kann die angetriebene rotierbare Anlageeinheit die aktive und/oder passive Anlageeinheit sein. Vorzugsweise sind alle Anlageeinheiten, sowohl die zwei passiven, als auch die aktive, angetrieben.

Dabei kann vorzugsweise lediglich eine einzige Antriebseinheit vorgesehen sein, die die mindestens eine angetriebene rotierbare Anlageeinheit antreibt. Dadurch kann eine besonders einfach anzusteuernde Werkstückaufnahmevorrichtung bereitgestellt werden.

Weiterhin ist ein Ausführungsbeispiel bevorzugt, bei dem die mindestens eine angetriebene rotierbare Anlageeinheit ein angetriebenes rotierbares Antriebselement, wie beispielsweise ein Reibrad oder eine Reibrolle aufweist, die dazu ausgelegt ist, mit einer bestimmbaren Reibkraft am Werkstück anzuliegen und reibschlüssig mit dem Werkstück zusammenzuwirken, um es zu rotieren. Dadurch kann ein besonders einfacher und kostengünstiger Antrieb für das Werkstück bereitgestellt werden.

Dabei ist insbesondere vorteilhaft, wenn die zwischen Antriebselement, insbesondere Reibrad oder Reibrolle, und Werkstück aufgebrachte Reibkraft über eine direkt aufgebrachte Anlagekraft zwischen aktivem Anlageelement und Werkstück und/oder einer indirekten Anlagekraft zwischen passivem Anlageelement und Werkstück, definiert ist. Dadurch kann sichergestellt werden, dass auch bei thermischer Kontraktion oder Expansion des Werkstücks ein optimierter Antrieb des Werkstücks bereitgestellt ist.

Dabei ist insbesondere vorteilhaft, wenn zumindest an einer der Anlageeinheiten, insbesondere an der aktiven Anlageeinheit, eine Messvorrichtung, beispielsweise ein Drucksensor vorgesehen ist, der die Anlagekraft bestimmt. Ebenfalls vorteilhaft ist dabei eine Ausführung, bei der basierend auf der gemessenen Anlagekraft eine Steuereinheit die aktive Anlageeinheit derart ansteuern kann, dass die Anlagekraft und damit die Reibkraft optimiert ist. Dadurch kann sichergestellt werden, dass auch bei thermischer Expansion bzw. Kontraktion oder bei baulichen Ungleichmäßigkeiten, wie zum Beispiel einer Unwucht, das Werkstück trotzdem immer mit einer konstanten Kraft angetrieben wird. Ebenfalls werden Beschädigungen aufgrund zu hoher Krafteinwirkung auf das Werkstück vermieden.

Des Weiteren kann dadurch auch sichergestellt werden, dass ein Schlupf zwischen Werkstück und Anlageeinheit minimiert wird. Durch die bestimmte Anlagekraft kann zudem auch ein Verschleiß zwischen Werkstück und Anlageeinheit minimiert werden. Ebenfalls können dadurch der Werkstückverzug minimiert und/oder plastische Werkstückdeformationen vermieden oder minimiert werden. Zudem ermöglicht die definierte Reibkraft eine präzise Einstellung der Rotationsgeschwindigkeit, so dass es insbesondere möglich ist, das Werkstück mit einer definierten Geschwindigkeit rotieren zu lassen.

Gemäß einem weiteren vorteilhaften Ausführungsbeispiel weist die Anlageeinheit mindestens eine Messvorrichtung zur Erfassung von Form -und Maßänderungen während des Erwärmprozesses und nach Abschluss des Erwärmprozesses (Verzug) auf. Die erfassten Daten können auch für nachfolgenden Bearbeitungsprozesse verwendet, um Werkstückindividuelle Anpassungen an den Prozessen vorzunehmen. In einem bevorzugten Ausführungsbeispiel weist mindestens eine Anlageeinheit, insbesondere das aktive Anlageelement, mindestens eine Kraftmessvorrichtung auf, die mit der Steuereinheit zusammenwirkt und dazu ausgelegt ist, die Anlagekraft, mit der die Anlageeinheit, insbesondere das aktive Anlageelement, an dem Werkstück anliegt, zu messen.

Weiterhin ist vorteilhaft, wenn das aktive Anlageelement vorgespannt ist. Die Vorspannung des aktiven Anlageelements kann mittels eines mechanischen Vorspannelements, wie beispielsweise einer Feder, erreicht sein. Mechanische Vorspannelemente können einfach eingebaut werden und erfordern keine zusätzliche Ansteuerung, was insgesamt die Werkstückaufnahmevorrichtung leicht bedienbar und kostengünstig macht.

Dabei kann das mechanische Vorspannelement zumindest ein Federelement sein, das mit dem aktiven Anlageelement zusammenwirkt und das aktive Anlageelement in Richtung Werkstück vorspannt. Das Federelement kann beispielsweise eine Drahtfeder, eine Tellerfeder, Schraubenfeder und/oder Blattfeder sein, es können aber auch Kunststoffe wie beispielsweise ein Elastomer verwendet werden.

Weiterhin ist möglich, dass die mechanische Vorspannung als Reibeinrichtung ausgebildet ist, die eine Bewegung des aktiven Anlageelements erst nach Überschreiten eines bestimmten Reibwerts ermöglicht. Dadurch kann basierend auf dem Druck, den ein expandierendes/kontrahierendes Werkstück bei einer thermischen Bearbeitung auf das bewegliche Element ausübt, einer Bewegung des aktiven Anlageelements erst nach Überschreiten eines bestimmten Schwellenwerts erfolgen.

Statt einer mechanischen Vorspanneinrichtung kann die Vorspannung des aktiven Anlageelements auch mittels einer Vorrichtung erfolgen, die über eine Steuereinheit ansteuerbar ist. Dabei kann die Vorspannung beispielsweise über ein hydraulisches, pneumatisch und/oder elektrisch betriebenes Element erfolgen, das der thermischen bzw. eine durch einen bei der Phasenumwandlung im Gefüge entstehenden Dichteunterschied entstehende Expansion/Kontraktion nachfolgt. Beispielsweise kann das aktive Anlageelement ein öl- oder gasbetriebener Druckdämpfer sein.

Bei einer mit einer Steuereinheit angesteuerten Vorspannungen ist zwar bereits eine besonders genaue Nachfolgung der Kontraktion/Expansion möglich. Um die Genauigkeit und Sensitivität der Nachfolgung noch zu erhöhen, kann, wie oben erwähnt, die Anlageeinheit, die Auflageeinheit und/oder die Antriebseinheit mit mindestens einer Kraftmessvorrichtung ausgestattet sein, die mit der Steuereinheit zusammenwirkt und dazu ausgelegt ist, die Anlagekraft, Spannkraft und/oder Reibkraft zu messen. Abhängig von dieser gemessenen Kraft kann dann die Steuereinheit die Anlageeinheit, die Auflageeinheit und/oder die Antriebeinheit ansteuern, um eine gleichmäßige Kraft auf das Werkstück während der Behandlung auszuüben. Durch die Kraftmessvorrichtung ist außerdem eine Anpassung an Fertigungsungenauigkeiten beim Einspannen des Werkstücks in die Werkstückaufnahmevorrichtung möglich, sodass bereits beim Einspannen des Werkstücks ein gleichmäßiger Druck an den verschiedenen Spanneinheiten erreicht wird.

Alternativ oder zusätzlich kann selbstverständlich die Steuereinheit auch basierend auf einer vorab berechneten Wertetabelle die Anlageeinheit, die Auflageeinheit und/oder die Antriebseinheit ansteuern, um die berechneten und zu erwartenden Expansionen/Kontraktionen ausgleichen zu können. Dabei kann die Wertetabelle empirisch bestimmt sein und/oder in einer Datenbank abgelegt sein, die der Steuereinheit zugänglich ist. Das bedeutet, die Datenbank kann sowohl intern in der Steuereinheit selbst abgespeichert sein, oder in einer externen Datenbank vorhanden sein.

In einer bevorzugten Ausgestaltung kann die Steuereinheit auch zusätzlich auf Kräfte, welche auf das Werkstück durch die Bearbeitungsanlage wirken, reagieren und abhängig von gemessenen Kräften oder vorausschauend eine Vorspannung gezielt erhöhen oder erniedrigen. Beispielsweise kann in Erwartung von elektrischen, mechanischen oder magnetischen Kräften, welche zeitweise auf das Werkstück einwirken, die aktuelle Vorspannung gezielt gesteuert um einen Vorspannwert erhöht oder erniedrigt werden. Diese zeitweise Überlagerung der aufgrund der thermischen Expansion geregelten Vorspannung mit einem gesteuerten Offset kann vorzugsweise an- und abgeschaltet werden. Auch hier kann aufgrund einer Wertetabelle die Anlageeinheit, Auflageeinheit und/oder Antriebseinheit angesteuert werden, um die berechneten und zu erwartenden Kräfte auf das Werkstück zuverlässig aufzunehmen und/oder ausgleichen zu können. Weiterhin kann die Steuereinheit derart ausgelegt sein, dass sie von einem geregelten Betrieb, in welchem die Vorspannkräfte basierend auf gemessenen Werten der Kraftmessvorrichtung, z.B. einer Kraftmessdose, eingestellt werden, auf einen gesteuerten Betrieb, in welchem die Vorspannkräfte basierend auf einer Wertetabelle eingestellt werden, umgeschaltet werden kann, und entsprechend von dem Steuerbetrieb in den Regelbetrieb zurückgeschaltet werden kann. So ist es zum Beispiel möglich, während einer thermischen Expansion die Vorspannung weitestgehend oder gänzlich auf einen bestimmten Vorspanndruck zu regeln und während einer nachfolgenden thermischen Kontraktion, wie beispielsweise einem schnellen Abschrecken, den Vorspanndruck auf einen festen Wert zu erhöhen.

Dabei kann die Wertetabelle oder eine Einstellung der Spannkraft, Anlagekraft und/oder Reibkraft basierend auf Werten der Wertetabelle insbesondere von gemessenen und/oder berechneten Temperaturänderungen oder taktil bzw. optisch gemessenen bzw. berechneten Durchmesserveränderungen des Werkstücks, die während des Bearbeitungsvorgangs in dem Werkstück zu erwarten sind, abhängen.

Gemäß einem weiteren bevorzugten Ausführungsbeispiel ist das Anlageelement als Gleitschuh ausgebildet ist, der vorzugsweise eine an der radialen Innenfläche und/oder radialen Außenfläche anliegende Anlagefläche aufweist, wobei vorzugsweise die Anlagefläche eine Krümmung aufweist, die an eine Krümmung der radialen Innenfläche und/oder radialen Außenfläche angepasst ist. Ein derartiger Gleitschuh ermöglicht eine besonders präzise Führung und gleichmäßige Spannung des Werkstücks, wobei die Spannkraft auf eine relative große Fläche verteilt wird. Dabei ist besonders bevorzugt, wenn die passiven Anlageelemente als Gleitschuhe ausgestaltet sind. Derartige Ausführungsformen sind insbesondere vorteilhaft, wenn jedweder Verzug bei der Wärmebehandlung, auch aufgrund der Spannkrafteinwirkung, vermieden werden soll.

Gemäß einem weiteren bevorzugten Ausführungsbeispiel ist mindestens eines der Anlageelemente als rotierbares an dem Werkstück anliegendes Anlageelement ausgebildet. Vorzugsweise ist dessen Drehachse im Wesentlichen parallel zu der Drehachse des Werkstücks ausgebildet. Selbstverständlich ist ebenfalls eine zu der Drehachse des Werkstücks schräg stehende Drehachse möglich.

Alternativ oder zusätzlich weisen die auch Auflageeinheiten jeweils mindestens ein rotierbares Auflageelement auf, auf dem das Werkstück aufliegt, und dessen Drehachse vorzugsweise senkrecht zu einer Drehachse des Werkstücks ausgebildet ist. Dadurch kann die Reibung zwischen Werkstück und Auflageelement reduziert werden, so dass auch schnelle Rotationen des Werkstücks in der Werkstückaufnahme möglich sind. Darüber hinaus wird der Energieverbrauch zum Drehen des Werkstücks reduziert.

Vorteilhafterweise sind dabei alle Auflageelemente passiv ausgestaltet, werden also lediglich durch die Rotation des Werkstücks in Rotation versetzt. Dabei ist insbesondere vorteilhaft die Auflageelemente als Kugeln auszugestalten. Diese ermöglichen ein einfaches passives Mitdrehen. Zudem ermöglichen die Kugeln aufgrund der Punktauflage des Werkstücks auf den Kugeln eine fast reibungslose, schlupfreduzierte / -frei Lagerung des Werkstücks während der Rotation und Wärmebehandlung.

Selbstverständlich ist es aber ebenfalls möglich, auch mindestens eines der Auflageelemente als Antriebselement, wie beispielsweise als Reibrad oder Reibrolle, auszugestalten und es aktiv anzutreiben. Dieses kann alternativ oder zusätzlich zu dem mindestens einen angetriebenen Anlageelement vorgesehen sein. Dabei ist insbesondere vorteilhaft, wenn alle Antriebselemente, seien es eine Auflageelement und/oder ein Anlageelement mit nur einer einzigen Antriebseinheit angetrieben werden. Selbstverständlich kann natürlich auch jedes Antriebselement separat von einer Antriebseinheit angetrieben werden.

Weiterhin ist, wie oben schon angedeutet, ein Ausführungsbeispiel bevorzugt, bei dem lediglich eines der rotierbare Anlageelemente und/oder Auflageelemente aktiv angetrieben ist, wobei jeweils die anderen beiden rotierbaren Anlageelemente/ Auflageelemente passiv, über die Bewegung des Werkstücks in Rotation versetzt sind. Dies ermöglich eine besonders reibarme und energiesparende Bewegung des Werkstücks.

Besondere bevorzugt ist eine Ausführungsbeispiel, bei dem alle rotierbaren Auflageelemente passiv ausgestaltete sind und nur über die Rotation des aufliegenden Werkstücks mitrotieren. Die Rotation des Werkstücks wird dagegen über die angetriebenen Anlageelemente erreicht. Dabei ist wiederum bevorzugt, dass alle Anlageelemente bzw. Anlageeinheiten angetrieben sind, unabhängig davon, ob sie als aktive oder passive Anlageelemente/Anlageeinheiten ausgestaltet sind. Die Begriffe aktive Anlageeinheit bzw. passive Anlageeinheit /Anlageelement beziehen sich im Sinne dieser Anmeldung auf die radiale Verstell- und Nachführbarkeit während des Betriebs, wie oben beschrieben.

Die angetriebenen Anlageelemente werden, wie oben ebenfalls bereits erwähnt, bevorzugt mit einer einzigen Antriebeinheit synchron angetrieben.

Gemäß einem weiteren bevorzugten Ausführungsbeispiel, ist weiterhin mindestens eine Drehzahlmesseinheit vorgesehen ist, die eine Drehzahl der Antriebseinheit bzw. des Antriebselements bestimmt. Dabei kann die Antriebseinheit bzw. das Antriebselement an der Anlageeinheit bzw. dem Anlageelement und/oder aber auch an der Auflageeinheit bzw. dem Auflageelement realisiert sein.

Darüber hinaus kann vorzugweise eine weitere Drehzahlmesseinheit an einem der passiven rotierenden Anlageelementen/Auflageelementen vorgesehen sein, die eine Drehzahl der passiv angetriebenen Anlageelementen und/oder Auflageelementen bestimmt.

Weiterhin ist vorzugsweise eine Steuereinheit vorgesehen, die dazu ausgelegt ist, aus einem Drehzahlunterschied zwischen den aktiven und passiv angetriebenen Anlageelementen/Auflageelementen einen Schlupf des Werkstücks zu bestimmen. Neben der oben beschriebenen Anlagekraftbestimmung kann auch mit Hilfe der Drehzahlmessung festgestellt werden, ob eine ausreichende Reibkraft/Anlagekraft der Antriebselementen gegeben ist, oder ob die von den Anlageeinheiten/Anlageelementen aufgebrachte Spannkraft ausreicht, um das Werkstück ausreichend fest in der Werkstückaufnahme zu befestigen. So kann zum Beispiel die Steuereinheit dazu ausgelegt sein, die Antriebseinheit und/oder die Anlageeinheit und/oder die Auflageeinheit anzusteuern, um die Anlagekraft, bzw. die Spannkraft zu optimieren und den Schlupf zu minimieren.

Insbesondere ist vorteilhaft, wenn die Steuereinheit weiterhin dazu ausgelegt ist, bei Überschreitung eines vorbestimmten Drehzahlunterschieds eine Anlagekraft des Anlageelement, wie beispielsweise der Reibrolle/des Reibrads und/oder eine Spannkraft der Anlageeinheiten zu erhöhen, und/oder eine Mitteilung über einen erhöhten Schlupf auszugeben.

Ebenfalls alternativ oder zusätzlich kann die Drehachse des Anlageelements und/oder des Auflageelements parallel zu einer Oberfläche des zu rotierenden Werkstücks orientiert sein. Diese rotierbaren Anlageelemente/ Auflageelemente können beispielsweise bei Bewegung des Werkstücks passiv mitbewegt werden und reduzieren so eine Reibung beim Bewegen des Werkstücks.

Gemäß einem weiteren vorteilhaften Ausführungsbeispiele weist mindestens eines der Anlageelemente und/oder Auflageelemente eine zylindrische, kegelige, ballige und/oder kugelige Form auf. Die genaue Form kann von mehreren Faktoren abhängen. Zum einen kann die Form an die Form bzw. Krümmung der radialen Innen- bzw. Außenfläche (Anlageflächen) und/oder an die Form bzw. Krümmung einer axialen Auflagefläche des Werkstücks angepasst sein. Dabei ist insbesondere bevorzugt, dass das rotierende Anlageelement/Auflageelemente das Werkstück entlang einer Linie berührt. Dies ermöglicht eine reine Rotationsbewegung zwischen rotierendem Anlageelemente/Auflageelemente und Werkstück ohne Gleitbewegung. Es ist jedoch gleichermaßen möglich, die Form auf eine minimale Anlage aber ausreichende Anlagekraft/Abstützkraft hin zu wählen. Ebenfalls kann die Form aufgrund von Rotationsüberlegungen ausgewählt sein. Weiterhin ist möglich, dass die Anlageeinheiten/Auflageeinheiten unterschiedliche rotierbare Anlageelemente/Auflageelemente aufweisen. Dabei kann zusätzlich vorgesehen sein, dass das rotierbare Anlageelemente/Auflageelemente lediglich einen Reibbelag oder eine Reibbeschichtung aufweist, die für den aktiven Antrieb sorgt.

Gemäß einem weiteren bevorzugten Ausführungsbeispiel ist mindestens eines der Anlageelemente/Auflageelemente lösbar an der zugehörigen Anlageeinheit/ Auflageeinheit befestigt ist. Dabei weist die zugehörige Anlageeinheit/Auflageeinheit einen Zapfen oder eine Stange auf, auf den das Anlageelement/Auflageelement aufsteckbar ist, und das Anlageelement/Auflageelement als Aufsteckhülse ausgebildet ist. Dies ermöglicht einen leichten Austausch des Anlageelements/Auflageelements, um beispielsweise das Anlageelement/Auflageelement an das zu behandelnde Werkstück anzupassen und/oder das Anlageelement/Auflageelement im Zuge von Wartungsarbeiten auszutauschen.

Darüber hinaus kann vorteilhafterweise auch eine Ortslage des austauschbaren Anlageelements/Auflageelements, insbesondere ein radialer Abstand des austauschbaren Auflageelements zu einem Mittelpunkt der Werkstückaufnahmevorrichtung und/oder eine axiale Erstreckung des Anlageelement, beliebig eingestellt werden. Dadurch können Werkstücke unterschiedlicher Form und Größe, insbesondere mit unterschiedlichem Durchmesser und/oder unterschiedlicher Höhe von der Werkstückaufnahmevorrichtung aufgenommen werden.

Gemäß einem weiteren bevorzugten Ausführungsbeispiel, umfasst die mindestens eine Anlageeinheit und/oder Auflageeinheit weiterhin eine Anstellvorrichtung, die dazu ausgelegt ist, eine Winkelstellung des Anlageelements und/oder Auflageelements einzustellen. Dies ermöglicht ebenfalls eine besonders gute Anpassung der Anlageelemente/ Auflageelemente an die Geometrie des Werkstücks. So ist mit Hilfe der Anstellvorrichtung beispielsweise mögliche ein zylinderförmiges Anlageelement/Auflageelement auch für schräg verlaufende Radialflächen zu verwenden und immer noch das rotierende Anlageelement/Auflageelement mit Linienberührung an dem Werkstück zu führen. Alternativ könnte hier auch eine kegelige Hülse verwendet werden.

Weiterhin ist bevorzugt, dass das rotierbare Anlageelement und/oder Auflageelement als Hülse ausgebildet ist, die an der Anlageeinheit bzw. Auflageeinheit befestigbar ist, und eine gerade oder gekrümmte Außenfläche aufweist, insbesondere eine zylindrische, kegelige, kugelige und/oder toroidale Form hat.

Dabei ist insbesondere ein Ausführungsbeispiel bevorzugt, bei dem das Anlageelement eine keglige Form aufweist, die über eine Oberkante des Werkstücks in Richtung Werkstück auskragt, so dass das Anlageelement nicht nur als radiales Anlageelement, sondern auch als axial wirkendes Anlageelement dient. Die axiale Anlage sorgt dafür, dass das Werkstück in der Werkstückaufnahme in Richtung Auflageeinheit gehalten wird, so dass das Anlageelement als Niederhalter dient.

Ein weiterer Aspekt vorliegender Erfindung betrifft eine induktive Härteanlage zum Härten eines Werkstücks mit einem geschlossenen Kurvenzug, das eine im Wesentlichen radiale Innenfläche und eine im Wesentlichen radiale Außenfläche aufweist. Weiterhin umfasst die induktive Härteanlage eine Werkstückaufnahmevorrichtung, wie vorstehend beschrieben, und eine Induktionsspule zum Erwärmen des Werkstücks. Dabei ist die Induktionsspule dazu ausgelegt, einen elektrischen Strom in dem Werkstück zu induzieren und so einen definierbaren Wärmeeintrag in das Werkstück zu erzielen, um es dadurch zu erwärmen. Gerade bei induktiven Härteanlage ist es nötig, eine Werkstückaufnahmevorrichtung bereitzustellen, die das Werkstück sicher während des Erwärmprozesses hält und gleichzeitig eine einfache und robuste Regelung der von der Werkstückaufnahmevorrichtung aufgebrachten Spannkraft auf das Werkstück auch bei der zu erwartenden thermischen Expansion bzw. Kontraktion ermöglicht. Dazu weist, wie ebenfalls oben bereits ausführlich besprochen, die Werkstückaufnahmevorrichtung zumindest drei Anlageeinheiten auf, wobei lediglich eine Anlageeinheit als aktive Anlageeinheit ausgebildet ist, die aktive angesteuert werden kann, um der thermischen Expansion bzw. Kontraktion nachzufolgen, während die anderen Anlageeinheiten passiv ausgebildet sind, die sich im Betrieb nicht in radialer Richtung verstellen.

Dabei ist insbesondere bevorzugt, wenn der Induktor zwischen den zwei passiven Anlageeinheiten angeordnet ist. Dadurch muss der Induktor lediglich vor dem Härteprozess einmal an dem zu behandelnden Werkstück ausgerichtet werden und kann dann während des Härteprozesses in dieser Position gehalten werden, da keine weiteren oder nur vergleichbar geringe radialen Verschiebungen des Werkstücks zwischen den feststehenden passiven Anlageelementen zu erwarten sind. Dadurch ist es nicht nötig, den Induktor aktiv zu regeln und abhängig von der thermischen Expansion/Kontraktion des Werkstücks nachzufahren, was die Steuerung und Regelung der induktiven Härteanlage deutlich vereinfacht. Alternativ kann natürlich auch der Induktor nachgeregelt und nachgefahren werden, falls erforderlich.

Gemäß einem weiteren bevorzugten Ausführungsbeispiel, ist weiterhin ein Lasermessgerät vorgesehen, das dazu ausgelegt ist, einen Koppelspalt zwischen Induktionsspule und Werkstück zu bestimmen. Weiterhin ist eine Steuereinheit zum Steuern der aktiven Anlageeinheit, insbesondere des aktiven Anlageelements der aktiven Anlageeinheit, vorgesehen, wobei die Steuereinheit dazu ausgelegt ist, basierend auf der vom Lasermessgerät bestimmten Koppelspaltgröße, eine Anlagekraft der aktiven Anlageeinheit, insbesondere des aktiven Anlageelements, und/oder eine Position des Induktors derart zu steuern, dass der Koppelspalt zwischen Werkstück und Induktionsspule im Wesentlichen konstant ist. Dadurch kann es unnötig werden, den Induktor aktiv zu regeln und anhängig von der thermischen Expansion/Kontraktion des Werkstücks nachzufahren, was die Steuerung und Regelung der induktiven Härteanlage deutlich vereinfacht.

Die Anlageeinheiten, Auflageeinheiten und/oder Antriebseinheiten der Werkzeugaufnahmevorrichtung können einzeln oder gemeinsam ansteuerbar sein.

Damit die Anlageeinheiten, Auflageeinheiten und/oder Antriebseinheiten nicht selbst eine zu große thermische Expansion/Kontraktion erfahren, sind sie vorteilhafterweise aus einem temperaturbeständigen Material, wie beispielsweise Keramik, Polymerkeramik, Aluminiumsilikat, Stein, Schamott oder aus speziellen Stahllegierungen gefertigt.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

### Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine schematische Ansicht auf ein erstes Ausführungsbeispiel einer Werkstückaufnahmevorrichtung;
Fig. 2: eine schematische Ansicht auf ein weiteres Ausführungsbeispiel einer Werkstückaufnahmevorrichtung;
Fig. 3: eine schematische Ansicht auf ein weiteres Ausführungsbeispiel einer Werkstückaufnahmevorrichtung;
Fig. 4: eine schematische Ansicht auf ein weiteres Ausführungsbeispiel einer Werkstückaufnahmevorrichtung;
Fig. 5: eine perspektivische Ansicht auf ein weiteres Ausführungsbeispiel einer Werkstückaufnahmevorrichtung;
Fig. 6: schematische Schnittansichten durch verschiedene Ausführungsformen eines Anlageelement oder Auflageelements;
Fig. 7: eine schematische Schnittansicht durch ein weiteres Ausführungsbeispiel einer Werkstückaufnahmevorrichtung;
Fig. 8: eine schematische Schnittansicht durch ein weiteres Ausführungsbeispiel einer Werkstückaufnahmevorrichtung; und
Fig. 9: eine schematische Schnittansicht durch ein weiteres Ausführungsbeispiel einer Werkstückaufnahmevorrichtung.

### Detaillierte Beschreibung der Erfindung

Im Folgenden werden gleiche oder funktionell gleichwirkende Elemente mit denselben Bezugszeichen gekennzeichnet.

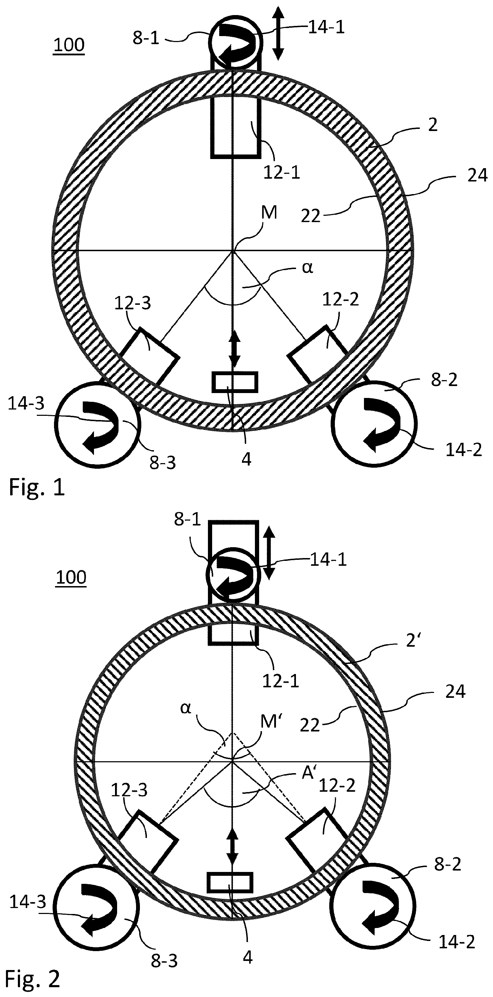

Figur 1 zeigt schematisch eine perspektivische Ansicht auf eine Werkstückaufnahmevorrichtung 6, die in einer Induktionshärteanlage 100 verwendet werden kann, um ein Werkstück 2, bspw. einen Lagerring, mithilfe eines Induktors 4 induktiv zu härten. Die in Figur 1 dargestellte Induktionshärteanlage 100 ist dabei als Härteanlage ausgebildet, bei der der Induktor 4 immer nur einen Teil des Werkstücks 2 erwärmt, während das Werkstück 2 an dem Induktor 4 vorbeibewegt wird. Dazu wird das Werkstück 2 in eine Werkstückaufnahmevorrichtung 6 eingespannt und an dem Induktor 4 vorbeibewegt. Die Werkstückaufnahmevorrichtung 6 weist zum Aufnehmen des Werkstücks 2 mindestens drei Anlageeinheiten 8-1, 8-2, 8-3 auf, die dazu ausgelegt sind, das Werkstück 2 zu halten.

Weiterhin zeigt Figur 1, dass das Werkstück 2 in den dargestellten Ausführungsbeispielen auf drei Auflageeinheiten 12-1, 12-2, 12-3 aufliegt.

Weiterhin ist in den Figuren gezeigt, dass die Anlageeinheiten 8-2, 8-3 als sogenannte passive Anlageeinheiten ausgebildet sind, die zumindest im Betrieb radial feststehend sind. Die Anlageeinheit 8-1 dagegen ist als aktive Anlageeinheit ausgebildet und kann in radialer Richtung, auch im Betrieb, verstellt werden, um zum einen die Werkstückaufnahmevorrichtung 6 an verschiedene Größen von Werkstücken 2 anzupassen, als auch einer thermischen Expansion/Kontraktion beim Erwärmen nachfolgen zu können.

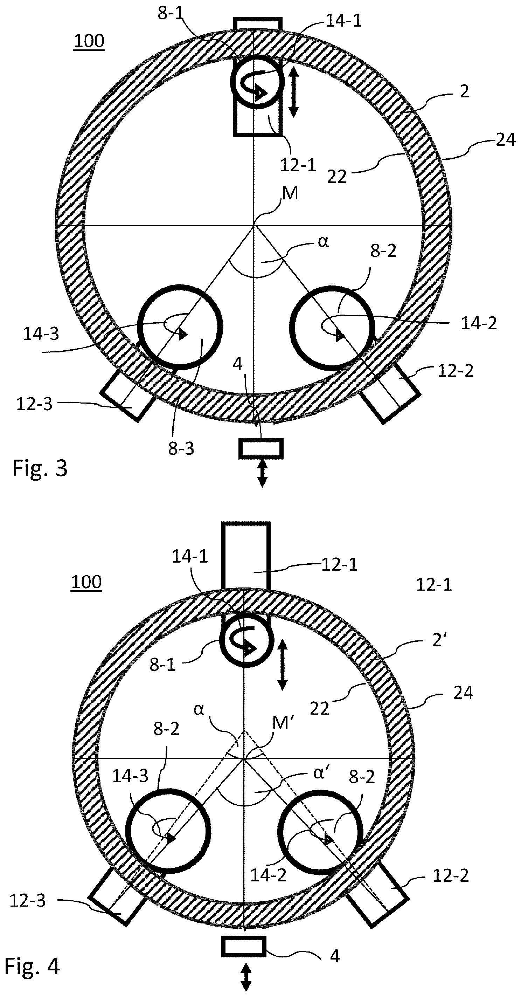

Wie insbesondere im Vergleich zwischen Fig. 1 und 2 bzw. Fig. 3 und 4 gezeigt, ist in der gleichen Werkstückaufnahme 100 ein größerer Lagerring 2, siehe Fig. 1; 3 und ein kleinerer Lagerring 2', siehe Fig. 2; 4 eingespannt. Das bedeutet aber auch, dass ausgehend von einem Mittelpunkt M, M' der Lagerringe 2; 2' bzw. der Werkstückaufnahmevorrichtung 100, die Anlageeinheiten 8-2 bzw. 8-3 nicht den gleichen Winkel α einschließen. Wie Fig. 1 und Fig. 2 bzw. Fig. 3 und Fig. 4 entnommen werden kann, ist bei den kleineren Lagerringen 2' (siehe Fig. 2 und 4) der Winkel α' zwischen den passiven Anlageeinheit 8-2; 8-3 größer als bei den größeren Lagerringen 2 (siehe Fig. 1; 3). In Fig. 2 bzw. 4 ist der Mittelpunkt M' sowie der Winkel α' der Fig. 1 bzw. als gestrichelte Linien mit eingezeichnet, um zu verdeutlichen, dass die Anlageeinheit 8-2 und 8-3 sowohl für die kleineren als auch die größeren Lageringe2'; 2 in der gleichen Position verbleiben.

Da für die Anpassbarkeit an verschiedene Größen des Werkstücks 2, 2' lediglich die aktive Anlageeinheit 8-1 radial verstellbar sein muss, wird die gesamte die Werkstückaufnahmevorrichtung 6 signifikant vereinfacht, da lediglich eine einzige Anlageeinheit 8-1 an die Größe des Werkstücks 2; 2' angepasst werden muss. Dadurch kann auch sichergestellt werden, dass unabhängig von der Größe des Werkstücks, das Werkstück immer mittig in der Werkstückaufnahme zentriert ist.

Statt nun wie im Stand der Technik die gesamte Anlage 6 zu drehen, um das Werkstück 2 am Induktor 4 entlang zu bewegen, ist weiterhin eine Antriebseinheit vorgesehen, die dazu ausgelegt ist, nur das Werkstück 2 zu drehen. In den in Figur 1 bis 4 dargestellten Ausführungsbeispielen sind die Anlageeinheit 8-1; 8-2; 8-3 als angetriebene Anlageeinheiten 14-1, 14-2, 14-3 ausgebildet, bspw. als Reibrad bzw. Reibrolle ausgestaltet, die Antriebseinheiten 14 bilden und direkt auf das Werkstück 2 einwirken und dieses in Rotation versetzt (siehe Pfeil). Dazu weisen die Anlageeinheiten 8-1, 8-2, 8-3 beispielsweise angetriebene Anlageelemente (Reibrollen) auf. Die angetriebenen Anlageeinheiten 14 bzw. die angetriebenen Anlageelemente werden bevorzugt alle von einem einzigen Motor (nicht dargestellt) angetrieben. Dies stellt sicher, dass alle angetriebenen Anlageelemente 14 mit der gleichen Rotationsgeschwindigkeit rotieren, so dass das Werkstück 2 gleichmäßig angetrieben wird.

Weiterhin ist möglich, an einer oder mehreren der Anlageeinheiten 8 und/oder Auflageeinheiten 12 eine oder mehrere Messvorrichtungen anzubringen (nicht dargestellt), die dazu ausgelegt ist, eine Anlagekraft und/oder Spannkraft und/oder Reibkraft zwischen den Anlageeinheiten 8 und/oder den Auflageeinheiten 12 und dem Werkstück 2 zu messen. Ebenfalls kann weiterhin ein Steuergerät (nicht dargestellt) vorgesehen sein, das derart mit den Einheiten 8, 12 und 14 zusammenwirkt, dass die Anlageeinheiten 8 und/oder Auflageeinheiten 12 mit einer vorgegeben Anlagekraft, Spannkraft und/oder Reibkraft mit dem Werkstück 2 zusammenwirken, bzw. die Antriebseinheit 14 eine entsprechende Rotationsgeschwindigkeit bereitstellen.

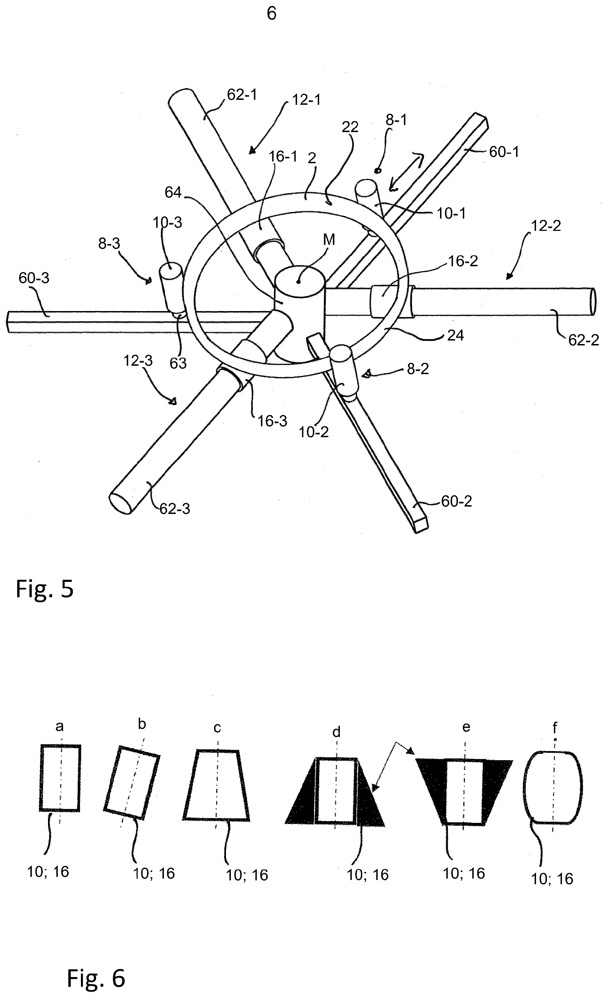

Figur 5 zeigt eine schematisch-perspektivische Ansicht einer derartigen Werkstückaufnahmevorrichtung 6, die in einer Induktionshärteanlage 100, wie in den Figur 1 bis 4 schematisch dargestellt, verwendet werden kann. Die Werkstückaufnahmevorrichtung 6 umfasst in dem dargestellten Ausführungsbeispiel drei Träger 60-1, 60-2, 60-3 und Wellen 62-1, 62-2, 62-3, die jeweils die Anlageeinheiten 8 (Träger 60) und die Auflageeinheiten 12 (Wellen 62) tragen. Dabei können die Träger 60 und die Wellen 62 auch als einstückig integrale Elemente ausgebildet sein, wie in den Figuren 1 bis 4 schematisch dargestellt. Die Wellen 62 und die Träger 60 wiederum sind an Lagerungen 64 befestigt, so dass sich die Träger 60 von einem Drehmittelpunkt M axial versetzt radial nach außen erstrecken, wobei der Drehmittelpunkt M über die Rotation des Werkstücks 2 in der Werkstückaufnahmevorrichtung 6 bestimmt ist. Die Wellen und Träger können drehbar an der Lagerung 64 befestigt sein.

Weiterhin ist Figur 5 zu entnehmen, dass im Bereich, in dem das Werkstück 2 auf den Wellen 62 aufliegt, Auflageelemente 16-1, 16-2, 16-3 vorgesehen sind, die in dem dargestellten Ausführungsbeispiel als zylinderförmige Hülsen ausgebildet sind, die drehbar an den Wellen 62 angeordnet sind. Aufgrund der Drehbarkeit der Auflageelemente 16 kann das Werkstück 2 leicht in Rotation versetzt werden.

Weiterhin zeigt Figur 5, dass an den Trägern 60 die Anlageeinheiten 8-1, 8-2, 8-3 in Form von Anlageelementen 10-1, 10-2, 10-3 vorgesehen sind, die dazu ausgelegt sind, das Werkstück 2 in seiner Lage zu sichern. Dabei ist die Anlageeinheit 8-1 als aktive Anlageeinheit ausgebildet und ist sowohl vor dem eigentlichen Härten also auch während des eigentlichen Härtens in ihrer radialen Position verstellbar. Die Anlageeinheiten 8-2 bzw. 8-3 sind dagegen als passive Anlageeinheiten ausgebildet, die radial zumindest im Betrieb der Induktionshärteanlage nicht verstellbar sind. Um sehr große Werkstückunterschiede ausgleichen zu können, ist selbstverständlich auch möglich, dass für eine grobe Justierung des Werkstücks, auch die passiven Anlageelemente radial verstellbar ausgebildet sind, um radial an den Trägern 60 bzw. an der Welle 62 verstellt werden, bis sie das Werkstück 2 kontaktieren und in seiner Lage sichern.

Des Weiteren ist gezeigt, dass die Anlageeinheiten 8 Anlageelemente 10 in Form von Anlagerollen 10 aufweisen. Die Anlageelemente 10 können als Hülsen ausgestaltet und lösbar und drehbar auf Naben 63 aufgesteckt sein. Dabei ist das aktive Anlageelement 10-1 zusammen mit seiner Nabe 63 entlang des Trägers 60-1 radial verschiebbar ausgebildet (siehe Pfeil), um an unterschiedliche Werkstücke 2 angepasst zu werden. Zudem kann im Betrieb das aktive Anlageelement derart angesteuert werden, dass es dem Werkstück nachfährt und thermischen Expansionen bzw. Kontraktionen des Werkstücks ausgleicht, so dass die Anlageelemente 10 immer mit der gleichen Anlagekraft an dem Werkstück anliegen.

Dabei ist insbesondere bevorzugt, wenn die Anlageelemente 10, wie in Fig. 6 dargestellt als Aufsteckhülse ausgebildet sind. Dabei kann die Aufsteckhülse 10 eine zylindrische (Fig. 6a, 6b), kegelige (Fig. 6c-6e), ballige (Fig. 6f) und/oder kugelige Form aufweist. Die genaue Form kann von mehreren Faktoren abhängen. Zum einen kann die Form an die Form bzw. Krümmung einer radialen Innen- bzw. Außenfläche 22; 24 des Werkstücks 2 angepasst sein. Dabei ist insbesondere bevorzugt, dass die Aufsteckhülse das Werkstück 2 entlang einer Linie berührt, wobei die Linie parallel zu der Drehachse ausgerichtet ist. Dies ermöglicht eine reine Rotationsbewegung zwischen rotierendem Element und Werkstück ohne Gleitbewegung. Es ist jedoch gleichermaßen möglich, die Form auf eine minimale Anlage aber ausreichende Spannkraft hin zu wählen. Ebenfalls kann die Form aufgrund von Rotationsüberlegungen ausgewählt sein. Weiterhin ist möglich, dass die Anlageeinheiten 8-1 bis 8-3 unterschiedlich ausgestaltet Aufsteckhülsen aufweisen. Dabei kann insbesondere vorgesehen sein, dass die Aufsteckhülse 10-1 der aktiven Anlageeinheit 8-1 unterschiedlich ausgestaltet ist zu den Aufsteckhülsen 10-2; 10-3 der passiven Anlageeinheiten 8-2; 8-3.

Gemäß einem weiteren bevorzugten Ausführungsbeispiel kann die Nabe 63 auch mit Hilfe einer Anstellvorrichtung (nicht dargestellt) winkelig angestellt werden, wie auch schematisch in Fig. 6b angedeutet. Dies ermöglicht ebenfalls eine besonders gute Anpassung der rotierenden Elemente an die Geometrie des Werkstücks. So ist mit Hilfe der Anstellvorrichtung beispielsweise mögliche ein zylinderförmiges rotierbares Element auch für schräg verlaufende Radialflächen zu verwenden und immer noch das rotierende Element mit Linienberührung an dem Werkstück zu führen. Alternativ könnte hier auch eine kegelige Hülse, wie in den Fig. 6c bis 6d dargestellt, verwendet werden.

Alternativ oder zusätzlich können die Anlageeinheiten 8, oder zumindest eine der Anlageeinheiten 8, als angetriebene Anlageeinheiten 14 ausgebildet sein. Dabei ist dann insbesondere bevorzugt, wenn das Anlageelement 10 beispielsweise als Reibrolle ausgestaltet ist, die reibend an dem Werkstück 2 anliegt und aktiv in Rotation versetzt wird, um das Werkstück 2 zu drehen. Auch die Reibrolle kann eine zylindrisch, kegelige, ballige, toroidale und/oder kugelige Form aufweisen, wie in Fig. 6 dargestellt. Alternativ oder zusätzlich kann zu dem angetriebene Anlageelement 10 ein angetriebenen Auflageelement 16 vorhanden sein.

Auch die drehbaren Auflageelemente 16 der Auflageeinheiten 12 können als austauschbare Hülsen mit den in Fig. 6 beispielshaft gezeigten Formen ausgebildet sein. Dadurch können sie zum einen für eine reibarme und verkippsichere Lagerung des Werkstücks 2 und gleichzeitig für eine besonders gute Zugänglichkeit zu den zu behandelnden Oberflächen sorgen. Zum anderen ermöglicht die flexible Ausgestaltung über die auswechselbaren Hülsen auch eine Anpassung an die Formgebung des Werkstücks selbst.

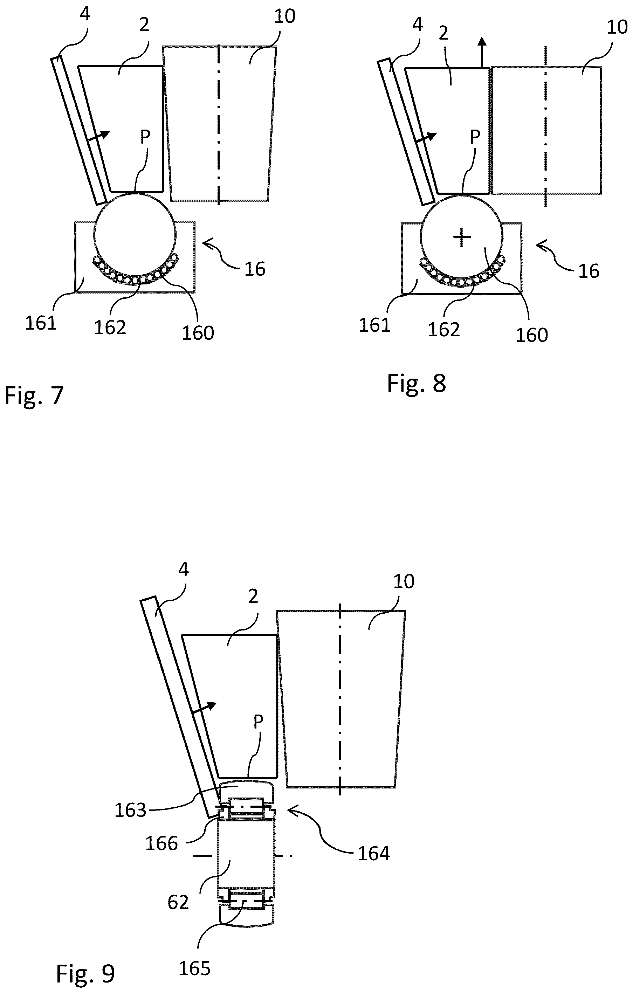

Besonders bevorzugt ist ein Ausführungsbeispiel bei dem das Anlageelement 10 eine keglige Form hat, wie in Fig. 7 dargestellt. Dadurch kann, wie unter anderem in den Fig. 7 und 8 dargestellt, sichergestellt werden, das Werkstück auf dem Auflageelement 16 gehalten wird, da eine vom Induktor 4 induzierte Bewegung nach oben zuverlässig verhindert wird. Ist das Anlageelement 10 als Zylinder ausgebildet, wie in Fig. 8 dargestellt, ist eine Bewegung des Werkstücks von dem Auflageelement 16 weg nach oben möglich. Somit fungiert ein kegliges Anlageelement 10 gleichzeitig als Niederhalter.

Selbstverständlich können auch separate Niederhalter (nicht dargestellt) zum Einsatz kommen, die eine axiale Spannung auf das Werkstück 2 aufbringen. Niederhalter werden insbesondere bei leichten Werkstücken und hohen Magnetfeldstärken des Induktors 4 eingesetzt, um das Werkstück sicher und positionsgenau in der Werkstückaufnahmevorrichtung 100 zu halten.

Weiterhin zeigen Fig. 7 und Fig. 8 ein Ausführungsbeispiel, bei dem das Auflageelement 16 als Kugel 160 ausgebildet ist. Dadurch kontaktiert das Werkstück 2 das Auflageelement 16 nur in einem Punkt P. Die Kugel 160 wiederum ist in einem Kugelträger 161 drehbar gelagert, beispielsweise mittels weiteren Kugeln 162, wie in Figuren 7 und 8 dargestellt, oder gleitend in einer Kugelaufnahme.

Die Punktlagerung ermöglicht eine besonders reibfreie und schlupffreie Auflage des Werkstücks 2 auf dem Auflageelement 16, so dass das Werkstück schnell und ohne zu großen Energieaufwand über die Auflageelemente 16 rotieren kann.

Statt eines Kugelelement 160, kann das Auflageelement 16 auch über ein drehbar gelagertes Hülsenelement 163 ausgebildet sein, wobei das Hülsenelement 166 eine ballige Form aufweist, die wiederum das Werkstück 2 in nur einem Punkt P kontaktiert. Das Hülsenelement kann selbstverständlich in Gleitreibung auf die Welle 62 aufgesteckt sein, es ist jedoch auch möglich und in Fig. 9 dargestellt, das Hülsenelement 163 über ein Wälzlager164 zu lagern, wobei beispielsweise das Hülsenelement 163 als Außenring ausgestalten sein kann. Dabei kann weiterhin die Welle 62 als Innenring des Wälzlagers 164 fungieren kann. Wälzkörper 165 rollen dann auf der Innenseite des Hülsenelements 163 und der Außenseite der Welle 62 ab. Um das Hülsenelement axial auf der Welle 62 zu sichern kann weiterhin ein Spannring 166 vorgesehen sein, der die Wälzkörper 165 und damit auch das Hülsenelement 163 axial in ihrer Lage sichern.

Selbstverständlich kann auf die Welle 62 statt des Spannrings 166 auch ein Innenring aufgebracht sein, auf dem die Wälzkörper 165 abrollen.

Sowohl Spannring 166 als auch der Innenring sind vorzugsweise axial verschiebbar auf der Welle 62 angebracht, um das Hülsenelement 163 in Relation zu dem Werkstück 2 anzuordnen. In dem dargestellten Ausführungsbeispiel ist aber das Hülsenelement 163, bzw. die Kugel 160 als passive Auflageelemente ausgestaltet, die lediglich durch die Rotation des Werkstücks 2 bewegt werden.

Um das Werkstück 2 in Rotation zu versetzen ist dagegen mindestens eines der Anlageelement 10 als Antriebselement ausgestaltet. Weiterhin kann jedoch das Werkstück 2 auf dem Kugelelement 160 bzw. auf dem Hülsenelement 163 sich leicht axial hin und her bewegen, um beispielsweise einer thermischen Expansion und/oder Kontraktion beim Erwärmen und/oder fertigungsbedingten Unwuchten nachzufolgen und/oder ausgleichen zu können.

Insgesamt ermöglicht die flexible Ausgestaltung der Spanneinheiten und Auflageeinheiten eine besonders gute Anpassung der Werkstückaufnahmevorrichtung an diverse Formen der Werkstücke. Gleichzeitig sorgt die Ausgestaltung leidglich einer Anlageeinheit als aktive Anlageeinheit, die einer thermischen Expansion bzw. Kontraktion nachfolgen kann, für ein besonders einfach einzustellendes und robustes System. Dadurch kann eine einfach zu bedienende, individuell einstellbare Vorrichtung bereitgestellt werden, die jedoch universell für eine Vielzahl von Werkstücken verwendbar ist.

### Bezugszeichenliste

- 100: Härteanlage
- 2: Werkstück
- 4: Induktionsspule
- 6: Werkstückaufnahmevorrichtung
- 8: Anlageeinheit
- 10: Anlageelement
- 12: Auflageeinheit
- 14: Antriebseinheit
- 16: Auflageelement
- 160: Kugelelement
- 161: Kugelträger
- 162: Kugellager
- 163: Hülsenelement
- 164: Wälzlager
- 165: Wälzkörper
- 166: Spannring
- 22: radiale Innenseite des Werkstücks
- 24: radiale Außenseite des Werkstücks
- 60: Träger
- 62: Welle
- 63: Nabe
- 64: Lagerung

## Patentansprüche

1. Werkstückaufnahmevorrichtung zum Aufnehmen eines Werkstücks in einer Wärmebehandlungsanlage, insbesondere einer Härteanlage zum Härten zumindest eines Teils des Werkstücks, wobei das Werkstück einen geschlossenen Kurvenzug und eine im Wesentlichen radiale Innenfläche (22) und eine im Wesentlichen radiale Außenfläche (24) aufweist, und in der Werkstückaufnahmevorrichtung (6) um eine Drehachse herum rotierbar aufnehmbar ist und mittels einer Wärmvorrichtung erwärmbar ist, wodurch es eine thermische Expansion und/oder Kontraktion erfährt, wobei die Werkstückaufnahmevorrichtung (6) mindestens drei Auflageeinheiten (12) aufweist, die dazu ausgelegt sind, dass das Werkstück (2) auf ihnen aufliegt, und mindestens drei Anlageeinheiten aufweist, die dazu ausgelegt sind, dass das Werkstück (2) in der Werkstückaufnahmevorrichtung (6) in einer vordefinierten radialen Lage positioniert ist, **dadurch gekennzeichnet, dass** zwei der drei Anlageeinheiten als passive Anlageeinheit und eine der drei Anlageeinheiten als aktive Anlageeinheit ausgebildet sind, wobei die aktive Anlageeinheit dazu ausgelegt ist, eine radiale Spannkraft auf das Werkstück (2) aufzubringen.

2. Werkstückaufnahmevorrichtung (6) nach Anspruch 1, wobei jede Anlageeinheit ein Anlageelement aufweist, das dazu ausgelegt ist, an der radialen Innenfläche (22) und/oder radialen Außenfläche (24) des Werkstücks (2) anzuliegen, wobei die Anlageelemente der passiven Anlageeinheit als passive Anlageelemente ausgebildet sind, die im Betrieb in radialer Richtung feststehend sind, und das Anlageelement der aktiven Anlageeinheit (8) als aktives Anlageelement ausgebildet ist, das im Betrieb in radialer Richtung verschiebbar ist, um die radiale Spannkraft auf das Werkstück (2) aufzubringen.

3. Werkstückaufnahmevorrichtung (6) nach Anspruch 1 oder 2, wobei mindestens eine der Anlageeinheiten (8) als eine angetriebene rotierbare Anlageeinheit (8) ausgebildet ist, die von einer Antriebseinheit (14) angetrieben ist und dazu ausgelegt ist, das in der Werkstückaufnahmevorrichtung (6) aufgenommene Werkstück (2) in Rotation zu versetzen, wobei vorzugsweise die mindestens eine angetriebene rotierbare Anlageeinheit ein angetriebenes rotierbares Antriebselement, insbesondere ein Reibrad oder eine Reibrolle aufweist, die dazu ausgelegt ist, mit einer bestimmbaren Reibkraft am Werkstück (2) anzuliegen und reibschlüssig mit dem Werkstück (2) zusammenzuwirken, um es zu rotieren.

4. Werkstückaufnahmevorrichtung (6) nach einem der vorhergehenden Ansprüche, wobei mindestens eines der Anlageelemente (10) als rotierbares an dem Werkstück (2) anliegendes Anlageelement (10) ausgebildet ist.

5. Werkstückaufnahmevorrichtung (6) nach einem der vorhergehenden Ansprüche, wobei weiterhin die Auflageeinheiten (12) jeweils mindestens ein rotierbares Auflageelement (16), auf dem das Werkstück (2) aufliegt, aufweisen.

6. Werkstückaufnahmevorrichtung (6) nach Anspruch 5, wobei das rotierbare Auflageelement als passives, nicht angetriebenes Auflageelement, insbesondere als Kugel (160) oder balliges Hülsenelement (163) mit Punktberührung, ausgebildet ist.

7. Werkstückaufnahmevorrichtung (6) nach einem der vorhergehenden Ansprüche, wobei mindestens eines der Anlageelement (10) und/oder Auflageelement lösbar an der zugehörigen Anlageeinheit/Auflageeinheit befestigt ist.

8. Werkstückaufnahmevorrichtung (6) nach einem der vorhergehenden Ansprüche, wobei mindestens eine Anlageeinheit (8) und/oder mindestens eine Auflageeinheit weiterhin eine Anstellvorrichtung umfasst, die dazu ausgelegt ist, eine Winkelstellung des Anlageelements (10) und/oder Auflageelements einzustellen.

9. Werkstückaufnahmevorrichtung (6) nach einem der vorhergehenden Ansprüche, wobei das aktive Anlageelement (10) weiterhin dazu ausgelegt ist, in Richtung Werkstück (2) vorgespannt zu sein, so dass es mit einer vorbestimmten Anlagekraft an dem Werkstück (2) anliegt, wobei vorzugsweise das aktive Anlageelement (10) weiterhin dazu ausgelegt ist, der aufgrund der Wärmebehandlung im Werkstück (2) induzierten thermischen Expansion und/oder Kontraktion des Werkstücks nachzufolgen.

10. Werkstückaufnahmevorrichtung (6) nach einem der vorhergehenden Ansprüche, wobei weiterhin eine Steuereinheit vorgesehen ist, die dazu ausgelegt ist, die aktive Anlageeinheit, insbesondere das aktive Anlageelement, hinsichtlich Anlagekraft und/oder Spannkraft und/oder Reibkraft anzusteuern, und/oder die Antriebseinheit hinsichtlich einer Rotationsgeschwindigkeit des Werkstücks anzusteuern.

11. Induktive Härteanlage (100) zum Härten eines Werkstücks (2) mit einem geschlossenen Kurvenzug, das eine im Wesentlichen radiale Innenfläche (22) und eine im Wesentlichen radiale Außenfläche (24) aufweist, mit zumindest einer Werkstückaufnahmevorrichtung (6) zum Aufnehmen des Werkstücks (2) und einer Induktionsspule (8) zum Erwärmen des Werkstück (2), wobei die Induktionsspule (8) dazu ausgelegt ist, einen elektrischen Strom in dem Werkstück (2) zu induzieren und so einen definierbaren Wärmeeintrag in das Werkstück (2) zu erzielen, um es dadurch zu erwärmen, **dadurch gekennzeichnet, dass** die Werkstückaufnahmevorrichtung eine Werkstückaufnahmevorrichtung nach einem der Ansprüche 1 bis 10 ist und passive Anlageeinheiten und eine aktive Anlageeinheit aufweist.

12. Induktive Härteanlage nach Anspruch 11, wobei der Induktor (4) zwischen den zwei passiven Anlageeinheiten angeordnet ist.

13. Induktive Härteanlage nach Anspruch 11 oder 12, wobei weiterhin ein Lasermessgerät vorgesehen ist, das dazu ausgelegt ist, einen Koppelspalt zwischen Induktionsspule und Werkstück zu bestimmen, und eine Steuereinheit zum Steuern der aktiven Anlageeinheit, insbesondere des aktiven Anlageelements der aktiven Anlageeinheit, vorgesehen ist, wobei die Steuereinheit dazu ausgelegt ist, basierend auf der vom Lasermessgerät bestimmten Koppelspaltgröße, eine Anlagekraft der aktiven Anlageeinheit, insbesondere des aktiven Anlageelements, und/oder eine Position des Induktors derart zu steuern, dass der Koppelspalt zwischen Werkstück und Induktionsspule im Wesentlichen konstant ist.
